# EUROPÄISCHE PATENTSCHRIFT

(11) **EP 3 016 267 B1**
(45) Veröffentlichungstag und Bekanntmachung des Hinweises auf die Patenterteilung: **13.04.2022**
(21) Anmeldenummer: 14191313.7
(22) Anmeldetag: 31.10.2014
(51) Int. Cl.: H02P 6/18, H02P 1/46, H02P 25/08

(54) **Verfahren zum Zuschalten eines Umrichters auf eine rotierende Reluktanzmaschine, Steuereinrichtung sowie Antriebsanordnung**
Method for connecting an inverter to a rotating reluctance machine, control device and drive assembly
Procédé de commutation d'un convertisseur sur une machine de réluctance tournante, dispositif de commande et agencement d'entraînement

(43) Veröffentlichungstag der Anmeldung: 04.05.2016
(73) Patentinhaber: Siemens Aktiengesellschaft, 80333 München (DE)
(72) Erfinder: Weigel, Thilo, 90427 Nürnberg (DE)

(56) Entgegenhaltungen:
- DE-T5-112012 001 251
- US-A- 5 448 149
- US-A- 5 646 491
- US-A1- 2002 149 341

## Beschreibung

Die vorliegende Erfindung betrifft ein Verfahren zum Zuschalten eines Umrichters auf eine rotierende Reluktanzmaschine. Überdies betrifft die vorliegende Erfindung eine Steuereinrichtung für einen Umrichter einer Reluktanzmaschine. Schließlich betrifft die vorliegende Erfindung eine Antriebsanordnung.

Das Interesse richtet sich vorliegend auf Reluktanzmaschinen, insbesondere synchrone Reluktanzmaschinen ohne Dämpferkäfig. Derartige synchrone Reluktanzmaschinen ohne Dämpferkäfig weisen, sofern sie an einem Frequenzumrichter feldorientiert betrieben werden, einen speziell auch im Teillastbereich sehr guten Wirkungsgrad bei zugleich hoher verfügbarer Dynamik auf. Im Gegensatz zu Asynchronmaschinen existiert keine, den dynamischen Flussaufbau "störende" Rotorzeitkonstante, womit die synchrone Reluktanzmaschine den Vorzug bietet, im Teillastbereich bei abgesenktem Fluss äußerst energieeffizient zu fahren, zugleich aber eine Anforderung von hohem Lastmoment schnell zu magnetisieren. Den Vorteil im Wirkungsgrad erzielt die Reluktanzmaschine erstrangig durch den Wegfall der Rotorverluste, da dieser stationär synchron mit dem Stator-Drehfeld umläuft und über keinerlei Wicklungen verfügt. Im Vergleich zu einer permanenterregten Synchronmaschine sind vor allem die weitaus günstigeren Herstellungskosten der Maschine sowie die mögliche Kosteneinsparung beim Umrichterschutz attraktiv.

Steuereinrichtungen, die beispielsweise leistungsfähige Signalprozessoren aufweisen, bieten heute die Möglichkeit, die für die Reluktanzmaschine charakteristischen Nichtlinearitäten zu modellieren und die dadurch aufwendigen Algorithmen zu beherrschen. Nicht zuletzt aus diesem Grund erklärt sich das momentane Interesse der Industrie, die Vorzüge der synchronen Reluktanzmaschine in geeigneten Applikationen zu nutzen. Eines der favorisierten Applikationsfelder sind beispielsweise Antriebe für Pumpen oder Lüfter. Diese werden in der Regel drehzahlgeregelt betrieben und haben ausgedehnte Laufzeiten, wodurch sich ein hohes Energiesparpotenzial ergibt. Derartige Reluktanzmaschinen sind aus Kostengründen in den meisten Fällen ohne einen Sensor, der die Drehzahl- und/oder Kommutierungslage messen kann, konfiguriert. Speziell bei Lüftern ist es notwendig, auf die drehende Reluktanzmaschine zuzuschalten, den Antrieb quasi "abzuholen" und auf die vorgegebene Förderleistung zurückzufahren. Beim Zuschalten auf die drehende bzw. rotierende synchrone Reluktanzmaschine muss der Umrichter dreh- und phasenrichtig zur Rotorlage aufsetzen. Im Gegensatz zur permanenterregten Synchronmaschine besteht der Rotor nur aus Eisen (und Luft), wodurch die übliche Auswertung von Drehzahl und Phase mittels Messung der elektromotorischen Kraft nicht möglich ist.

Für das Zuschalten auf drehende Asynchronmaschinen und permanenterregte Synchronmaschinen ohne Drehzahl- und Lagesensor existieren diverse Verfahren. Bei Asynchronmaschinen ist die Identifikation der Drehzahl ausreichend, da die Phase kein Maschinenparameter ist. Hierzu kann beispielsweise ein Strom bei einer vorgegebenen variierenden Suchfrequenz eingeprägt werden. Die Suche startet in der Regel bei einer Maximalfrequenz und läuft gegen Null. Die zu identifizierende Drehzahl der Maschine liegt im Punkt der Maximalspannung. Weiterhin kann ein vollständiges Maschinenmodell, beispielsweise in Form eines Observers genutzt werden. Diese haben einen großen Einzugsbereich und schwingen auf die Maschinenfrequenz ein, wenn sie mit der realen Maschinenspannung versorgt werden. Bei permanenterregten Synchronmaschinen bedarf es der Bestimmung der Drehzahl und der Phase. Hierzu kann beispielsweise die elektromotorische Kraft, welche die Drehzahl und die Phasen des Rotors widerspiegelt, gemessen werden. Zudem kann ein Testpulsverfahren verwendet werden, bei dem eine Sequenz von Nullzeigern und Pulssperren erzeugt wird und die induzierten Pulsströme ausgewertet werden.

Alternativ zu den hier beschriebenen Verfahren wären bei einer synchronen Reluktanzmaschine die folgenden Verfahren möglich: Wie auch bei einer Asynchronmaschine sind Beobachter denkbar, die über einen großen Einzugsbereich verfügen und von einem vorgegebenen Startwert in Phase und Winkel einschwingen. Weiterhin könnte ein Testpulsverfahren denkbar sein, bei dem eine Sequenz von Aktivzeiger, Nullzeigern und Pulssperren bereitgestellt werden und die Impulsantworten in den Strömen ausgewertet werden.

Hierzu beschreibt die US 2002/0149341 A1 ein Verfahren zum Wiederverbinden eines elektrischen Motors mit einer Motorsteuerung, welche einen Regler zur Steuerung des durch Motors fließenden Stroms aufweist. Dabei wird ein Strom den Motor eingespeist und elektromotorische Kraft gemessen. Zudem wird der Phasenwinkel und hieraus die Frequenz der elektromotorischen Kraft bestimmt. Der Motor wird mit der Motorsteuerung in Abhängigkeit von der Frequenz der elektromotorischen Kraft verbunden.

Es ist Aufgabe der vorliegenden Erfindung, eine Lösung aufzuzeigen, wie ein Verfahren zum Zuschalten eines Umrichters auf eine rotierende Reluktanzmaschine einfacher und zuverlässiger erfolgen kann.

Diese Aufgabe wird durch ein Verfahren, durch eine Steuereinrichtung sowie durch eine Antriebsanordnung gemäß den jeweiligen unabhängigen Patentansprüchen gelöst. Vorteilhafte Ausführungen der vorliegenden Erfindung sind Gegenstand der abhängigen Ansprüche.

Ein erfindungsgemäßes Verfahren dient zum Zuschalten eines Umrichters auf eine rotierende Reluktanzmaschine, wobei die Reluktanzmaschine einen Stator mit einer Statorwicklung und einen Rotor mit einem magnetisch anisotropen Rotorpaket aufweist. Das Verfahren umfasst das Einprägen eines Gleichstroms in die Statorwicklung, das Bestimmen einer an der Statorwicklung anliegenden Spannung, welche durch eine in Folge der Rotation des Rotors bewirkte Änderung des magnetischen Flusses in die Statorwicklung induziert wird, und das Bestimmen einer Rotorfrequenz und/oder eines Rotorwinkels anhand der bestimmten induzierten Spannung mittels einer Steuereinrichtung.

Das Verfahren dient dazu, einen Umrichter, insbesondere einen Frequenzumrichter, drehzahl- und phasenrichtig zur Lage des Rotors der Reluktanzmaschine aufzusetzen. Die Reluktanzmaschine ist insbesondere als synchrone Reluktanzmaschine ohne Dämpferkäfig ausgebildet. Der Stator der Reluktanzmaschine weist insbesondere eine 3-Phasen-Drehstromwicklung auf. Der Rotor besteht aus einem magnetisch anisotropen Aufbau, insbesondere kann der Rotor entsprechende Flusssperrelemente, also luftgefüllte Bereiche, aufweisen, die derart angeordnet sind, dass ein richtungsabhängiger magnetischer Leitwert resultiert.

In die Statorwicklung wird ein Gleichstrom eingeprägt. Durch diesen eingeprägten Gleichstrom und des innerhalb des Stators rotierenden Rotors, dessen Rotorpaket magnetisch anisotrop ausgebildet ist, bildet sich ein zeitlich veränderlicher magnetischer Fluss aus. Dieser zeitlich veränderliche magnetische Fluss bewirkt, dass eine zeitlich veränderliche Spannung in die Statorwicklung induziert wird. Dem liegt die Erkenntnis zugrunde, dass bei vorhandener magnetische Anisotropie des Rotorpakets ein relativ zum Rotor auf einer Kreistrajektorie fortschreitender Stromraumzeiger allgemein zu einer verzerrten, insbesondere elliptischen, Trajektorie des Flussraumzeigers führt. Anhand der Geometrie des Rotorpakets und/oder der bestimmten induzierten Spannung können somit die Drehfrequenz des Rotors und/oder der Rotorwinkel bestimmt werden. Anhand der bestimmten Rotorfrequenz und/oder des bestimmten Rotorwinkels kann das Zuschalten des Umrichters auf die rotierende Reluktanzmaschine erfolgen. Somit kann der Umrichter auf einfache und zuverlässige Weise drehzahl- und phasenrichtig mit der Reluktanzmaschine elektrisch verbunden werden.

Zudem weist die Steuereinrichtung zumindest einen Zähler und/oder einen Detektor auf, mittels welchem eine Anzahl von Maxima der bestimmten induzierten Spannung und ein zeitlicher Abstand zwischen zwei benachbarten Maxima der bestimmten induzierten Spannung bestimmt wird. Ein entsprechender Zähler bzw. Counter kann auch dazu dienen, die Zeit zwischen den Spannungs-Nulldurchgängen der induzierten Spannung zu bestimmen. Anhand der zeitlichen Lage der Maxima kann beispielsweise der Rotorwinkel bestimmt werden. Anhand des Abstands zwischen zumindest zwei benachbarten Maxima kann die Rotorfrequenz bzw. die Drehzahl des Rotors auf einfache Weise ermittelt werden.

Zudem wird die Rotorfrequenz anhand eines zeitlichen Abstands zwischen zwei benachbarten Maxima der bestimmten induzierten Spannung bestimmt. Die Rotorfrequenz kann insbesondere nach Messung der induzierten Spannung bestimmt werden. Hierbei kann es auch vorgesehen sein, dass ein zeitlicher Abstand zwischen Nulldurchgängen und/oder zwischen Minima der zeitlich veränderlichen Spannung bestimmt wird. Anhand des zeitlichen Abstands zwischen zumindest zwei benachbarten Maxima der induzierten Spannung und/oder der bekannten Geometrie des Rotorpakets kann die Rotorfrequenz und somit die Drehzahl des Rotors bestimmt werden.

Bevorzugt wird die induzierte Spannung an der Statorwicklung mittels eines Spannungssensors gemessen. Hierzu kann beispielsweise ein entsprechender Spannungssensor vorgesehen sein, der die elektrische Spannung zwischen jeweils zwei Leitern bzw. zwei Phasen der Statorwicklung misst. Die gemessene induzierte Spannung kann dann an die Steuereinrichtung übertragen werden. Die Steuereinrichtung kann beispielsweise dazu ausgelegt sein, anhand der gemessenen induzierten Spannung ein Raumzeigersignal bereitzustellen. Somit kann die in die Statorwicklung induzierte Spannung einfach und zuverlässig bestimmt werden.

In einer weiteren Ausgestaltung weist die Steuereinrichtung einen Stromregler auf, mittels welchem eine Stellgröße für einen vorbestimmten elektrischen Strom für den Umrichter bereitgestellt wird. Zugleich kann in dieser Ausgestaltung am Ausgang des Stromreglers die induzierte Spannung in Form der Regler-Stellgröße gewonnen werden und somit auf eine Sensorik zur expliziten Messung der induzierten Spannung verzichtet werden. Damit resultiert die Auswertung in diesem Falle allein durch Messung des Stromes und seiner zeitlichen Abweichung vom vorgegeben Sollwert in Folge der induzierten Spannung.

Weiterhin ist es bevorzugt vorgesehen, dass der Rotorwinkel anhand einer Geometrie des Rotorpakets und/oder eines zeitlichen Verlaufs der induzierten Spannung bestimmt wird. Anhand der Geometrie des Rotorpakets, also der Anordnung der Flusssperrelemente in dem Blechpaket, kann die Lage der Pole des Rotors bestimmt werden. In Abhängigkeit von der Geometrie des Rotorpakets kann also bestimmt werden, durch welchen Bereich bzw. durch welche Bereiche des Rotors ein Maximum in der induzierten Spannung bewirkt wird. Anhand dieser Information kann auf einfache und zuverlässige Weise der Rotorwinkel des Rotors bestimmt werden.

In einer weiteren Ausgestaltung weist die Steuereinrichtung eine Phasenregelschleife zur Aufbereitung von Phase und Frequenz der induzierten Spannung auf. Eine derartige Phasenregelschleife wird auch als Phase-Locked Loop (PLL) bezeichnet. Die hohe Signalgüte am Ausgang der Phasenregelschleife kann daraus in einfacher Weise die direkte Bestimmung der Rotorfrequenz und/oder des Rotorwinkels anhand der aufbereiteten induzierten Spannung ermöglichen.

In einer weiteren Ausgestaltung weist die Steuereinrichtung einen Stromregler auf, mittels welchem ein Strom für den Umrichter bereitgestellt wird. Ein solcher Stromregler kann beispielsweise dazu dienen, anhand einer Regeldifferenz zwischen dem Stromsollwert und des gemessenen Wechselstroms, der durch die Statorwicklung fließt, die induzierte Spannung zu bestimmen. Der Stromregler kann den Stromsollwert für den Umrichter bzw. Frequenzumrichter bereitstellen. Anhand dieses Stromsollwerts kann der Frequenzumrichter einen entsprechenden elektrischen Strom zum Betrieb der Reluktanzmaschine ausgeben.

Eine erfindungsgemäße Steuereinrichtung für einen Umrichter einer Reluktanzmaschine ist dazu ausgelegt, ein erfindungsgemäßes Verfahren durchzuführen. Eine solche Steuereinrichtung kann beispielsweise einen entsprechenden Signalprozessor umfassen. Auf der Steuereinrichtung kann ein entsprechender Regelungscode zum Ablauf gebracht werden. Somit kann auf einfache und kostengünstige Weise eine Steuereinrichtung für einen Umrichter einer Reluktanzmaschine bereitgestellt werden.

Eine erfindungsgemäße Antriebsanordnung umfasst eine Reluktanzmaschine, einen Umrichter, der mit der Reluktanzmaschine elektrisch verbunden ist, und eine erfindungsgemäße Steuereinrichtung zum Ansteuern des Umrichters. Die Reluktanzmaschine ist insbesondere als synchrone Reluktanzmaschine ohne Dämpferkäfig ausgebildet. Der Umrichter kann insbesondere als Frequenzumrichter ausgebildet sein. Eine derartige Antriebsanordnung kann beispielsweise für Pumpen oder für Lüfter verwendet werden.

Die mit Bezug auf das erfindungsgemäße Verfahren vorgestellten bevorzugten Ausführungsformen und deren Vorteile gelten entsprechend für die erfindungsgemäße Steuereinrichtung sowie für die erfindungsgemäße Antriebsanordnung.

Weitere Merkmale der Erfindung ergeben sich aus den Ansprüchen, den Figuren und der Figurenbeschreibung. Alle vorstehend in der Beschreibung genannten und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert. Es zeigen:
- FIG 1: ein Statorkoordinatensystem und ein Rotorkoordinatensystem einer synchronen Reluktanzmaschine;
- FIG 2: das Rotorkoordinatensystem der Reluktanzmaschine, in dem ein Stromzeiger und ein Flusszeiger sowie deren Trajektorien dargestellt sind;
- FIG 3: das Statorkoordinatensystem, in dem der Stromzeiger, der Flusszeiger und ein Spannungszeiger sowie deren Trajektorien dargestellt sind;
- FIG 4: den zeitlichen Verlauf eines reellen und eines imaginären Anteils des Stroms ausgehend von dem Stator;
- FIG 5: den zeitlichen Verlauf eines reellen Anteils des Flusses und eines imaginären Anteils des Flusses ausgehend von dem Stator;
- FIG 6: einen zeitlichen Verlauf eines reellen Anteils und eines imaginären Anteils der Spannung ausgehend von dem Stator;
- FIG 7: eine Antriebsanordnung mit einer Reluktanzmaschine, einem Umrichter und einer Steuereinrichtung;
- FIG 8: die Antriebsanordnung gemäß FIG 7 in einer weiteren Ausführungsform; und
- FIG 9: die Antriebsanordnung gemäß FIG 7 in einer weiteren Ausführungsform.

Vorliegend soll ein Umrichter 6 mit einer rotierenden Reluktanzmaschine 2 drehzahl- und phasenrichtig verbunden werden. Die Reluktanzmaschine 2 ist insbesondere als synchrone Reluktanzmaschine 2 ohne Dämpferkäfig ausgebildet. Die Reluktanzmaschine 2 weist einen vorliegend nicht dargestellten Stator mit entsprechenden Statorwicklungen 11 auf. Zudem weist die Reluktanzmaschine 2 einen hier nicht dargestellten Rotor auf, der ein Rotorpaket aufweist, das magnetisch anisotrop ausgebildet ist. Das Rotorpaket kann aus einem Blechpaket gebildet sein und entsprechende Flusssperrelemente - also Luft gefüllte Bereiche bzw. Aussparungen - aufweisen, wodurch sich die magnetisch anisotrope Ausgestaltung ergibt.

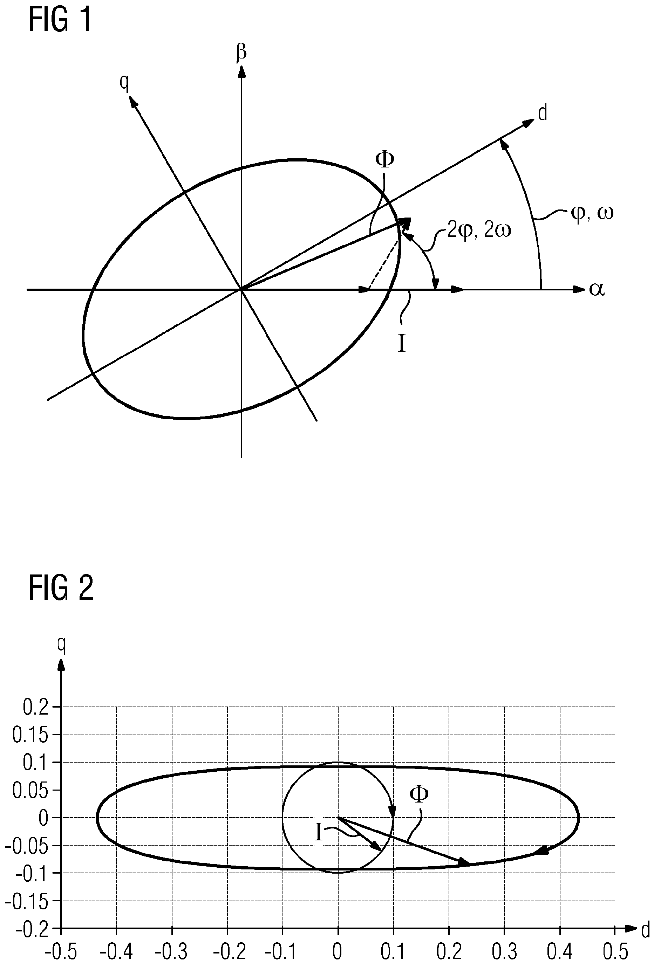

FIG 1 zeigt eine Raumzeigerdarstellung der Reluktanzmaschine 2. In der Raumzeigerdarstellung werden physikalische Größen der Reluktanzmaschine 2 als Zeiger in der komplexen Ebene dargestellt. In FIG 1 ist ein Statorkoordinatensystem gezeigt, dass die Achse α und die Achse β aufweist. Die Achse α zeigt den reellen Anteil und die Achse β zeigt den imaginären Anteil des Statorkoordinatensystems. Weiterhin ist ein zu dem Statorkoordinatensystem rotierendes Rotorkoordinatensystem mit den Achsen d und q gezeigt. Dabei zeigt die Achse d den reellen Anteil und die Achse q den imaginären Anteil in dem Rotorkoordinatensystem. Das Rotorkoordinatensystem ist bezüglich des Statorkoordinatensystems um den Rotorwinkel ϕ verschoben. Das Rotorkoordinatensystem rotiert mit der Winkelgeschwindigkeit ω.

In das Raumzeigersystem ist ein elektrischer Gleichstrom I als Stromzeiger eingezeichnet. Dieser Gleichstrom I wird in die Statorwicklung 11 eingeprägt. Der Gleichstrom I weist nur einen reellen Anteil auf. Der Rotor der Reluktanzmaschine 2 rotiert bezüglich des Stators. Der Rotor bzw. dessen Rotorpaket weist eine magnetische Anisotropie auf, der Rotor weist also einen richtungsabhängigen magnetischen Leitwert auf. Aufgrund dieser Eigenschaft wird ein relativ zum Rotor auf einer Kreistrajektorie fortschreitender eingeprägter Strom I bzw. Stromzeiger bei idealer linearer Betrachtung zu einer entsprechenden Bahn eines Flusszeigers, der den magnetischen Fluss Φ beschreibt. Die Bahn des Flusses Φ ergibt sich aus der geometrischen Ausgestaltung bzw. aus der magnetischen Anisotropie des Rotorpakets. In dem vorliegenden Ausführungsbeispiel resultiert in Betrachtung des Rotorsystems eine elliptische Bahn des Flusszeigers. Bei realer Betrachtung der Sättigung bleibt die elliptische Bahn qualitativ bestehen und erfährt lediglich eine von der Höhe des Strombetrags abhängige Verzerrung.

FIG 2 zeigt das Rotorkoordinatensystem, in welchem der Strom I und der Fluss Φ eingezeichnet sind. Vorliegend ist statorfest ein stehender Stromzeiger des Betrags I=0,1 eingeprägt. Der Rotor dreht sich in positiver Drehrichtung mit der Frequenz ω. Im Rotorkoordinatensystem erscheint der Gleichstrom I mit der Frequenz -ω umlaufend auf einer kreisförmigen Trajektorie. Aufgrund der magnetischen Anisotropie resultiert ein verzerrt elliptisch umlaufender Statorflusszeiger, der den Fluss Φ beschreibt.

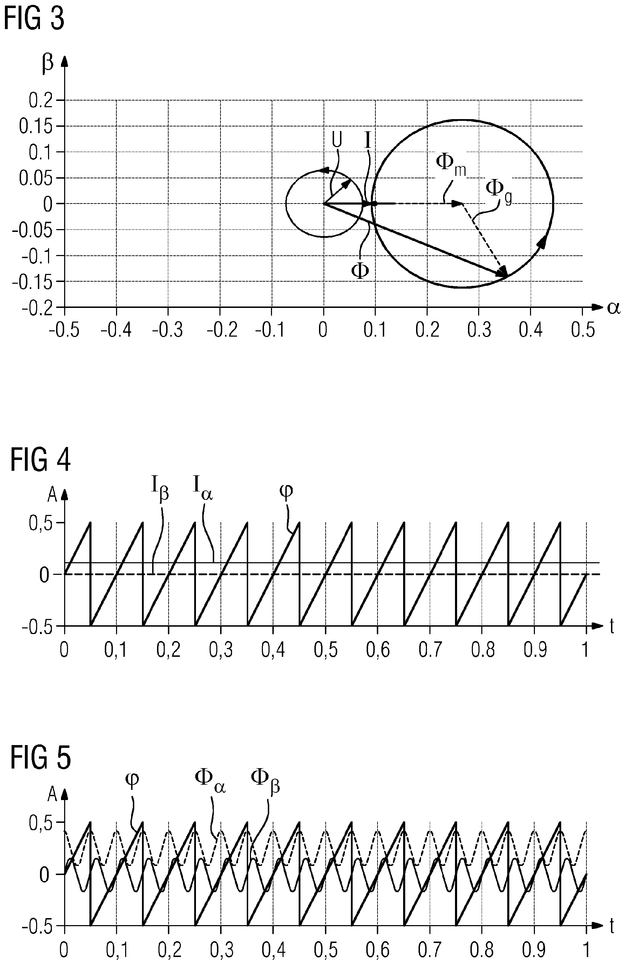

FIG 3 zeigt nun die Verläufe gemäß FIG 2 aus der Perspektive des Stromzeigers, also im Statorkoordinatensystem. Der Stromzeiger bzw. der Gleichstrom I erscheint vorliegend stehend. Der Flusszeiger, der den Fluss Φ beschreibt, ist in eine Mitkomponente Φₘ und eine Gegenkomponente Φ_{g} zerlegbar. Die Mitkomponente Φₘ steht in Phase zum Strom I. Die Gegenkomponente Φ_{g} dreht in die Richtung des laufenden Rotors mit der doppelten Frequenz 2ω. Die zeitliche Änderung des Flusses Φ ist gleich der zeitlichen Änderung der Gegenkomponente Φ_{g}, womit eine doppelfrequente induzierte Spannung U resultiert.

Insgesamt ergibt sich also folgende Konstellation: Wird der Strom I nun relativ zum Stator als stehender Stromzeiger eingeprägt und der Rotorwinkel ϕ schreitet fort, so induziert das Gegensystem Φ_{g} des Flusses Φ eine messbare induzierte Spannung U der doppelten Rotorfrequenz f und der doppelten Rotorphasenlage in die Statorwicklung.

Die FIG 4 bis 6 zeigen eine zeitliche Betrachtung der statorfesten Größen. Dabei ist der sägezahnförmige Verlauf des Rotorwinkels ϕ zu erkennen. FIG 4 zeigt den Verlauf des reellen Stromanteils I_{α} und des imaginären Stromanteils I_{β} des Stromes I in Abhängigkeit von der Zeit t. Die Amplitude A des reellen Stromanteils I_{α} des Stroms I weist beispielsweise den Wert 0,1 auf. Da es sich um einen Gleichstrom handelt weist der imaginäre Stromanteil I_{β} des Stroms I den Wert 0 auf.

FIG 5 zeigt den Verlauf des reellen Flussanteils Φ_{α} des Flusses Φ und den Verlauf des imaginären Flussanteils Φ_{β} des Flusses Φ in Abhängigkeit von der Zeit t. Sowohl der reelle Anteil Φ_{α} als auch der imaginäre Anteil Φ_{β} besitzen einen zur Rotorfrequenz doppelt-frequenten Wechselanteil. Dem reellen Anteil Φ_{α} ist zudem ein Offset überlagert. Weiter sind die Wechselanteile beider Komponenten zueinander phasenverschoben.

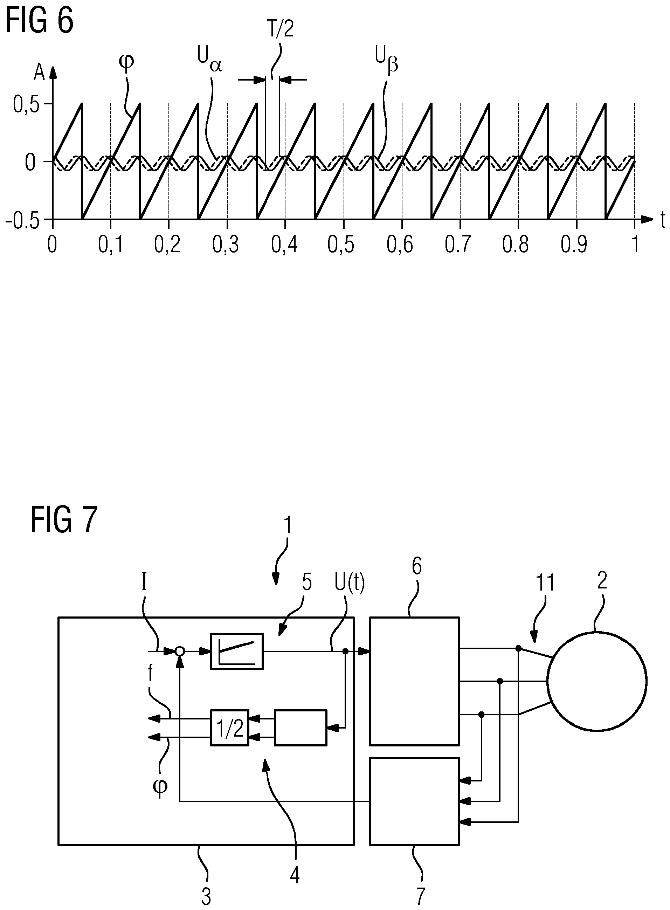

FIG 6 zeigt den zeitlichen Verlauf des reellen Spannungsanteils U_{α} der Spannung U und des imaginären Spannungsanteils U_{ß} der Spannung U. Die Spannungsanteile U_{α} und U_{β} weisen im Vergleich zu dem Rotorwinkel ϕ die doppelte Frequenz auf. Zudem eilen sie jeweiligen Flussanteilen Φ_{α} und Φ_{β} des Flusses Φ um 90° voraus und sind offsetfrei. Anhand des zeitlichen Verlaufs der Spannungsanteile U_{α} und U_{β} der induzierten Spannung U kann beispielsweise eine halbe Periodendauer T/2 bestimmt werden. Zudem können die Maxima der Spannungsanteile U_{α} und U_{β} bestimmt werden. Vorliegend ist beispielsweise ein Maximum des imaginären Spannungsanteils U_{β} mit einem Pfeil hervorgehoben.

FIG 7 zeigt eine Antriebsanordnung 1 in einer ersten Ausführungsform. Die Antriebsanordnung 1 umfasst die Reluktanzmaschine 2. Darüber hinaus umfasst die Antriebsanordnung 1 eine Steuereinrichtung 3. Ferner umfasst die Antriebsanordnung 1 einen Umrichter 6, der insbesondere als Frequenzumrichter ausgebildet ist. Der Umrichter 6 ist elektrisch mit der Statorwicklung 11 verbunden. In dem vorliegenden Ausführungsbeispiel weist die Statorwicklung 11 drei Phasen auf. In die Statorwicklung 11 wird nun der Gleichstrom I eingeprägt. Dieser bewirkt wie zuvor erwähnt eine induzierte U in der Statorwicklung 11. Diese induzierte Spannung U soll nun bestimmt werden. In dem vorliegenden Ausführungsbeispiel weist die Antriebsanordnung 1 lediglich einen Stromsensor 7 auf. Der Stromsensor 7 ist dazu ausgebildet, einen jeweiligen zeitlich veränderlichen Strom in den Phasen der Statorwicklung 11 zu bestimmen. Die Steuereinrichtung 3 ist dazu ausgelegt, anhand der Messwerte für die Phasenströme einen Stromzeiger zu bestimmen. Dieser wird einem Stromregler 5 zugeführt, der beispielsweise einen PI-Regler aufweist. Anhand der Stellsignale bzw. der Stellgröße am Reglerausgang kann der zeitliche Verlauf der induzierten Spannung U(t) bestimmt werden. Anhand des zeitlichen Verlaufs der induzierten Spannung U(t) kann mittels einer Phasenregelschleife 4 der Rotorwinkel ϕ und die Rotorfrequenz f bestimmt werden. Das Signal am Ausgang der Phasenregelschleife 4 wird mit dem Faktor ½ multipliziert, da die induzierte Spannung die doppelte Frequenz bezüglich des Rotorwinkels ϕ aufweist.

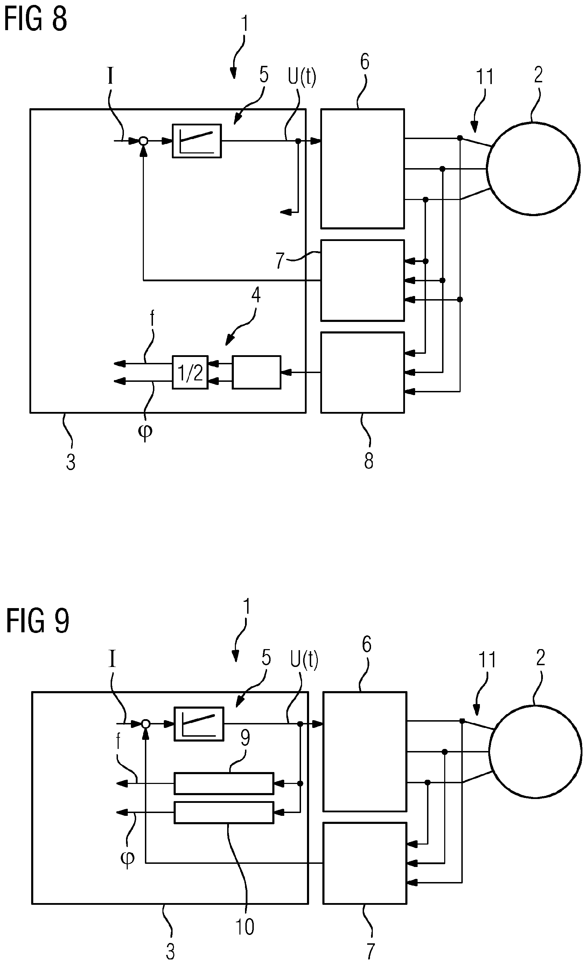

FIG 8 zeigt die Antriebsanordnung 1 in einer weiteren Ausführungsform. Hier ist ein Spannungssensor 8 vorgesehen, der die jeweiligen elektrischen Spannungen zwischen den einzelnen Phasen der Statorwicklungen 11 ermitteln kann. In diesem Fall wird die gemessene induzierte Spannung direkt der Phasenregelschleife 4 zugeführt.

FIG 9 zeigt die Antriebsanordnung 1 in einer weiteren Ausführungsform. Anstelle der Phasenregelschleife ist ein entsprechender Zähler 9 vorgesehen, der die Zeit zwischen den Nulldurchgängen der induzierten Spannung U bestimmen kann und somit die Rotorfrequenz f bestimmen kann. Weiterhin ist ein Detektor 10, insbesondere in Max/Min-Detektor vorgesehen, anhand der Maximalwerte der induzierten Spannung den Rotorwinkel ϕ bzw. die Phase bestimmen kann.

Mit den Antriebsanordnungen 1 gemäß den FIG 7 bis 9 kann die Rotorfrequenz f und der Rotorwinkel ϕ zuverlässig bestimmt werden. Somit kann der Umrichter 6 drehzahl- und phasenrichtig auf die drehende Reluktanzmaschine 2 geschaltet werden.

## Patentansprüche

1. Verfahren zum Zuschalten eines Umrichters (6) auf eine rotierende Reluktanzmaschine (2), wobei die Reluktanzmaschine (2) einen Stator mit einer Statorwicklung (11) und einen Rotor mit einem magnetisch anisotropen Rotorpaket aufweist, durch
- Einprägen eines Gleichstroms (I) in die Statorwicklung (11),
- Bestimmen einer an der Statorwicklung (11) anliegenden Spannung (U), welche durch eine in Folge der Rotation des Rotors bewirkte Änderung des magnetischen Flusses (Φ) in die Statorwicklung (11) induziert wird, und
- Bestimmen einer Rotorfrequenz (f) und/oder eines Rotorwinkels (ϕ) des Rotors anhand der bestimmten induzierten Spannung (U) mittels einer Steuereinrichtung (3),
**dadurch gekennzeichnet, dass**
- die Steuereinrichtung (3) zumindest einen Zähler (9) und/oder einen Detektor (10) aufweist, mittels welchem eine Anzahl von Maxima der induzierten elektrischen Spannung und ein zeitlicher Abstand zwischen zwei benachbarten Maxima der bestimmten induzierten Spannung (U) bestimmt wird und
- die Rotorfrequenz (f) anhand des zeitlichen Abstands zwischen den zwei benachbarten Maxima der bestimmten induzierten Spannung (U) bestimmt wird,
- der Rotorwinkel (ϕ) anhand einer Geometrie des Rotorpakets und eines zeitlichen Verlaufs der induzierten Spannung (U) bestimmt wird.

2. Verfahren nach Anspruch 1, **dadurch gekennzeichnet, dass** die induzierte Spannung (U) an der Statorwicklung (11) mittels eines Spannungssensors (8) gemessen wird.

3. Verfahren nach Anspruch 1 oder 2, **dadurch gekennzeichnet, dass** die Steuereinrichtung (3) einen Stromregler (5) aufweist, mittels welchem eine Stellgröße für einen vorbestimmten elektrischen Strom für den Umrichter bereitgestellt wird.

4. Verfahren nach einem der vorhergehenden Ansprüche, **dadurch gekennzeichnet , dass** die Steuereinrichtung (4) eine Phasenregelschleife (4) zur Aufbereitung von Phase und Frequenz der induzierten Spannung (U) aufweist.

5. Steuereinrichtung (3) für einen Umrichter (6) einer Reluktanzmaschine (2), welche zum Durchführen eines Verfahrens nach einem der Ansprüche 1 bis 4 ausgelegt ist.

6. Antriebsanordnung (1) mit einer Reluktanzmaschine (2), einem Umrichter (6), der mit der Reluktanzmaschine (2) elektrisch verbunden ist, und einer Steuereinrichtung (3) nach Anspruch 5 zum Ansteuern des Umrichters (6).

## Claims

1. Method for connecting a converter (6) to a rotating reluctance machine (2), wherein the reluctance machine (2) has a stator with a stator winding (11) and a rotor with a magnetically anisotropic rotor stack, by
- inputting a direct current (I) into the stator winding (11),
- determining a voltage (U) applied to the stator winding (11), which is induced inside the stator winding (11) by a variation in the magnetic flux (Φ) caused by the rotation of the rotor, and
- determining a rotor frequency (f) and/or a rotor angle (ϕ) of the rotor based on the determined induced voltage (U) by means of a control device (3),
**characterised in that**
- the control device (3) has at least one counter (9) and/or one detector (10), by means of which a number of maxima of the induced electrical voltage and a time interval between two adjacent maxima of the determined induced voltage (U) is determined and
- the rotor frequency (f) is determined on the basis of the time interval between the two adjacent maxima of the determined induced voltage (U),
- the rotor angle (ϕ) is determined on the basis of a geometry of the rotor stack and a chronological sequence of the induced voltage (U).

2. Method according to claim 1, **characterised in that** the induced voltage (U) is measured at the stator winding (11) by means of a voltage sensor (8).

3. Method according to claim 1 or 2, **characterised in that** the control device (3) has a current regulator (5), by means of which a manipulated variable is provided for a predetermined electrical current for the converter.

4. Method according to one of the preceding claims,
**characterised in that** the control device (4) has a phase locked loop (4) for processing phase and frequency of the induced voltage (U).

5. Control device (3) for a converter (6) of a reluctance machine (2) which is designed for carrying out a method according to one of claims 1 to 4.

6. Drive arrangement (1) comprising a reluctance machine (2), a converter (6) which is electrically connected to the reluctance machine (2) and a control device (3) according to claim 5 for actuating the converter (6).

## Revendications

1. Procédé de connexion d'un convertisseur (6) à une machine (2) à réluctance tournante, dans lequel la machine (2) à réluctance a un stator ayant en enroulement (11) statorique et un rotor ayant un paquet rotorique anisotrope magnétiquement, par
- application d'un courant (I) continu à l'enroulement (11) statorique,
- détermination d'une tension (U), qui s'applique à l'enroulement (11) statorique et qui est induite par une variation du flux (Φ) magnétique dans l'enroulement (11) statorique provoquée en raison de la rotation du rotor, et
- détermination au moyen d'un dispositif (3) de commande d'une fréquence (f) du rotor ou d'un angle (ϕ) du rotor à l'aide de la tension (U) induite déterminée,
**caractérisé en ce que**
- le dispositif (3) de commande a au moins un compteur (9) et/ou un détecteur (10), au moyen duquel on détermine un nombre de maximums de la tension électrique induite et une distance dans le temps entre deux maximums voisins de la tension (U) induite déterminée et
- on détermine la fréquence (f) du rotor à l'aide de la distance dans le temps entre les deux maximums voisins de la tension (U) induite déterminée,
- on détermine l'angle (ϕ) du rotor à l'aide d'une géométrie du paquet rotorique et d'une courbe en fonction du temps de la tension (U) induite.

2. Procédé suivant la revendication 1, **caractérisé en ce que** l'on mesure la tension (U) induite sur l'enroulement (11) statorique au moyen d'un capteur (8) de tension.

3. Procédé suivant la revendication 1 ou 2, **caractérisé en ce que** le dispositif (3) de commande a un régleur (5) de courant, au moyen duquel on dispose d'une grandeur de réglage d'un courant électrique déterminé à l'avance du convertisseur.

4. Procédé suivant l'une des revendications précédentes, **caractérisé en ce que** le dispositif (4) de commande a une boucle (4) de réglage de phase, pour disposer de la phase et de la fréquence de la tension (U) induite.

5. Dispositif (3) de commande d'un convertisseur (6) d'une machine (2) à réluctance, qui est conçue pour effectuer un procédé suivant l'une des revendications 1 à 4.

6. Agencement (1) d'entraînement comprenant une machine (2) à réluctance, un convertisseur (6) qui est connecté électriquement à la machine (2) à réluctance et un dispositif (3) de commande suivant la revendication 5 pour commander le convertisseur (6).
